# EUROPÄISCHE PATENTSCHRIFT

(11) **EP 3 829 813 B1**
(45) Veröffentlichungstag und Bekanntmachung des Hinweises auf die Patenterteilung: **05.06.2024**
(21) Anmeldenummer: 19740555.8
(22) Anmeldetag: 16.07.2019
(51) Int. Cl.: B24B 5/04, B24B 41/02, B23Q 1/48, B24B 3/02, B24B 3/24

(54) **VORRICHTUNG UND VERFAHREN ZUM BEARBEITEN EINES WERKSTÜCKS, INSBESONDERE EINES MIT SCHNEIDEN BESETZTEN WERKSTÜCKS, MITTELS EINES SCHLEIF- ODER ERODIERWERKZEUGS**
APPARATUS AND METHOD FOR MACHINING A WORKPIECE, IN PARTICULAR A WORKPIECE PROVIDED WITH CUTTING EDGES, BY MEANS OF A GRINDING OR EROSION TOOL
DISPOSITIF ET PROCÉDÉ DESTINÉS À TRAITER UNE PIÈCE À USINER, EN PARTICULIER UNE PIÈCE À USINER POURVUE DE LAMES, AU MOYEN D'UN OUTIL D'ABRASION OU D'ÉROSION

(30) Priorität: 31.07.2018 DE 102018006033
(43) Veröffentlichungstag der Anmeldung: 09.06.2021
(73) Patentinhaber: VOLLMER WERKE Maschinenfabrik GmbH, 88400 Biberach/Riss (DE)
(72) Erfinder: SAEGMUELLER, Manfred, 88444 Ummendorf (DE); GRUSCHKA, Gerhard, Biberach 88400 (DE); HAUGER, Arndt, 72175 Dornhan (DE); ENGSTLER, Mathias, 88433 Schemmerberg (DE); MAYR, Benjamin, 88487 Mietingen (DE); STROBEL, Martin, 73033 Goeppingen (DE)
(74) Vertreter: Thum, Bernhard
(86) Internationale Anmeldenummer: PCT/EP2019/069067
(87) Internationale Veröffentlichungsnummer: WO 2020/025310

(56) Entgegenhaltungen:
- EP-A1- 2 855 082
- EP-A2- 2 161 099
- EP-B1- 2 855 082
- CH-A5- 630 832
- DD-A1- 219 978
- DE-A1- 19 546 362
- DE-A1-102004 041 117
- DE-A1-102005 020 035
- DE-C2- 4 242 906

## Beschreibung

Die vorliegende Erfindung betrifft eine Vorrichtung und ein Verfahren zum Bearbeiten eines Werkstücks, insbesondere eines mit Schneiden besetzten Werkstücks, mittels eines Schleif- oder Erodierwerkzeugs. Die Vorrichtung umfasst insbesondere eine Basis, einen Werkstückträger mit einer Aufnahmeeinrichtung zum Aufnehmen eines Werkstücks, und eine Bearbeitungseinrichtung mit dem für das Bearbeiten verwendeten Schleif- oder Erodierwerkzeug, das eine Werkzeugachse aufweist, wobei die Aufnahmeeinrichtung mit dem darin aufgenommenen Werkstück um eine erste Rotationsachse der Aufnahmeeinrichtung drehbar ist und auf einer Schlittenanordnung angeordnet ist, die einen ersten Linearschlitten umfasst, der entlang einer dem ersten Linearschlitten zugeordneten ersten Linearachse verlagerbar ist, die parallel zur Rotationsachse verläuft, und die einen zweiten Linearschlitten umfasst, der entlang einer dem Linearschlitten zugeordneten zweiten Linearachse verlagerbar ist, die quer zur Rotationsachse und quer zur ersten Linearachse verläuft.

Derartige Vorrichtungen sind aus dem Stand der Technik bereits bekannt. So zeigt beispielsweise der Stand der Technik gemäß dem Dokument DE 41 35 823 C2 eine Werkzeugschleifmaschine der eingangs bezeichneten Art. Bei dieser Maschine wird ein Werkstück in aufrechter Position auf einer Schlittenanordnung angebracht, wobei die Werkstückachse im Wesentlichen vertikal verläuft. Eine die Schleifscheibe umfassende Bearbeitungseinrichtung ist auf einem weiteren Schlitten vorgesehen, wobei die Bearbeitungseinrichtung auf dem Schlitten um eine Schwenkachse verschwenkbar ist, die die Drehachse der Schleifscheibe schneidet. Diese Anordnung sieht vor, dass die Schleifscheibe relativ zum Werkstück über die Schlittenanordnung neu ausgerichtet werden muss, wenn sie über die Schwenkachse der Bearbeitungseinrichtung verstellt wird, um das Werkstück weiter bearbeiten zu können. Dies erfordert relativ aufwendige aufeinander abzustimmende Steuerbewegungen und führt damit zu einer verzögerten Bearbeitung.

Das Dokument DE 10 2011 000 335 B4 beschreibt ebenfalls eine Bearbeitungsmaschine, die insbesondere zur Schleifbearbeitung vorgesehen ist. Diese Maschine ist relativ aufwendig mit zwei innerhalb eines Rahmens verschwenkbaren Traversen ausgebildet, wobei an der einen Traverse der Werkstückträger und an der anderen Traverse eine Bearbeitungseinrichtung angeordnet ist. Die beiden Traverse sind relativ zueinander um im Wesentlichen parallele Achsen verschwenkbar. Zusätzlich zeigt diese Vorrichtung Freiheitsgrade zum Verschwenken der Bearbeitungseinrichtung relativ zu einer zur Traversenschwenkachse orthogonalen Schwenkachse. Auch das Werkstück kann innerhalb der Werkstückaufnahmeeinrichtung verschwenkt werden. Zusätzlich ist die Bearbeitungseinrichtung noch auf einer Linearschlittenanordnung angebracht. Diese Vorrichtung zeigt bei einem relativ komplizierten Aufbau das Erfordernis einer aufeinander abgestimmten kinematische Steuerung der Bewegungen der beiden Traversen zueinander, sowie einer hierauf abgestimmten Ansteuerung der Schlittenanordnung und der Verschwenkbewegung der Bearbeitungseinrichtung. Das Dokument DE 42 42 906 C2 zeigt eine Schleifmaschine, bei der die Aufnahmeeinrichtung zum Aufnehmen des Werkstücks über eine Schlittenanordnung auf einer Basis angeordnet ist, wobei die Schlittenanordnung eine lineare Verlagerung und eine rotatorische Verlagerung des Werkstücks zulässt. Darüber hinaus ist eine Bearbeitungseinrichtung über eine weitere Schlittenanordnung an der Basis angebracht. Zur Bearbeitung eines Werkstücks ist es erforderlich, sowohl die Aufnahmeeinrichtung über die dieser zugeordnete Schlittenanordnung als auch die Bearbeitungseinrichtung über die dieser zugeordneten Schlittenanordnung relativ zur Basis zu verlagern. Auch dies hat aufwändige kinematische Steuerungen zur Folge, worunter die Bearbeitungsgenauigkeit und Bearbeitungsdauer leidet.

Das Dokument EP 0 538 434 A1 (veröffentlicht unter WO 92/ 19 410 A1) beschreibt eine Erodiermaschine, bei der die Bearbeitungseinrichtung und die Werkstückaufnahmeeinrichtung jeweils auf Schlittenanordnungen angebracht sind, wobei die Bearbeitung eines Werkstücks aufeinander abgestimmte Bewegungen dieser Schlittenanordnungen relativ zur Basis erfordern.

Darüber hinaus ist eine gattungsgemäße Vorrichtung zum Schärfen von Werkzeugen mit Schneiden aus der EP 2 855 082 A1, das den Oberbegriff des Anspruchs 1 offenbart, bekannt.

Es ist eine Aufgabe der vorliegenden Erfindung, eine Vorrichtung und ein Verfahren der eingangs bezeichneten Art bereitzustellen, wobei die Vorrichtung einen verhältnismäßig einfachen Aufbau aufweist und wobei mit der Vorrichtung und dem Verfahren eine hochpräzise Bearbeitung von Werkstücken bei relativ geringen Verstellwegen möglich ist.

Diese Aufgabe wird durch eine Vorrichtung nach Anspruch 1 und ein Verfahren nach Anspruch 15 gelöst.

Weiterbildungen der Erfindung finden sich in den abhängigen Ansprüchen.

Ein wesentlicher Vorteil dieser Vorrichtung besteht darin, dass das Werkstück im Werkstückträger nicht über eine gesonderte Schlittenanordnung verstellbar ist, sondern alle linearen Verstellbewegungen unmittelbar über die Schlittenanordnung erfolgen, die dem Werkstückträger zugeordnet ist. Dadurch wird lediglich das Werkstück verlagert und es ist nicht erforderlich, zwei unterschiedliche Funktionseinheiten, nämlich Werkstückträger einerseits und Bearbeitungseinrichtung andererseits aufeinander abgestimmt zueinander kinematisch anzusteuern. Dies vereinfacht die Maschinensteuerung und wirkt sich vorteilhaft auf die Bearbeitungsqualität aus.

Darüber hinaus erlaubt die erfindungsgemäße Vorrichtung eine Bearbeitung von Werkstücken mit verhältnismäßig großen Konturänderungen, beispielsweise Werkstücke in Form von komplizierten Fräsköpfen, mit einer Vielzahl von Schneiden unterschiedlicher Geometrie. Selbst solche komplizierten Werkstücke lassen sich mit der erfindungsgemäßen Vorrichtung mit relativ geringen Stellbewegungen bearbeiten, beispielsweise dadurch, dass das Werkstück zur Konturbearbeitung an dessen Außenumfangsfläche oder Stirnfläche mittels des Werkstückträgers um die erste Rotationsachse verschwenkt wird und hierauf abgestimmt auch eine Verschwenkung zwischen der Schlittenanordnung und der Bearbeitungseinrichtung um die zweite Rotationsachse erfolgt, um so das Schleif- oder Erodierwerkzeug am Bearbeitungspunkt korrekt auszurichten. Durch die Vermeidung von großen Stellbewegungen während der Bearbeitung des Werkstücks erreicht man eine schnellere und präzisere Werkstückbearbeitung. Insbesondere die Qualität der Konturbearbeitung kann dadurch verbessert werden.

Ein wesentlicher Vorteil der Erfindung liegt ferner darin, dass der Bearbeitungspunkt des Schleif- oder Erodierwerkzeug, d. h. der Punkt, an dem das Schleif- oder Erodierwerkzeug an dem Werkstück zur Bearbeitung angreift, unmittelbar auf oder in unmittelbarer Nähe zu der zweiten Rotationsachse liegt. Dadurch lässt sich eine Bearbeitung des Konturbereichs des Werkstücks erzielen, bei der lediglich das Werkstück um die erste Rotationsachse verschwenkt wird, sodass eine Bearbeitung der Umfangsfläche des Werkstücks erfolgen kann, und bei der erforderlichenfalls die Bearbeitungseinrichtung relativ zur Aufnahmeeinrichtung um die zweite Rotationsachse verschwenkt wird. Bei einer reinen Konturbearbeitung des Werkstücks ist in einer solchen Situation selbst bei einem Verschwenken des Werkzeugsstück um die zweite Rotationsachse keine oder nur gering lineare Verstellbewegung über die Schlittenanordnung erforderlich, wie dies beim eingangs beschriebenen Stand der Technik nicht der Fall ist.

Es sei angemerkt, dass die zu bearbeitende Oberfläche des Werkstücks insbesondere eine Oberfläche einer Schneide eines spanabhebenden Werkzeugs sein kann, beispielsweise eines Fräskopfes.

Eine Weiterbildung der Erfindung sieht vor, dass sich die zweite Rotationsachse vorzugsweise senkrecht zu einer Fläche einer Oberseite der Basis erstreckt. Bei einer derartigen Anordnung lassen sich Reaktionskräfte besonders vorteilhaft auf die Basis ableiten. Die Basis kann auf einem Untergrund positionierbar und gegenüber diesem abgestützt sein. Ferner können zumindest der Werkstückträger, die Aufnahmeeinrichtung und die Bearbeitungseinrichtung derart benachbart zu einer Fläche einer Oberseite der Basis an der Basis angeordnet sein, dass sie durch die Basis von dem Untergrund beabstandet sind.

Darüber hinaus kann erfindungsgemäß vorgesehen sein, dass die Bearbeitungseinrichtung um die zweite Rotationsachse drehbar an der Basis angebracht ist. Alternativ ist es möglich, dass die Bearbeitungseinrichtung fest an der Basis fixiert ist, wobei die der Aufnahmeeinrichtung zugeordnete Schlittenanordnung oder die auf der Schlittenanordnung angebrachte Aufnahmeeinrichtung um die zweite Rotationsachse drehbar ist. Zum Anbringen der Bearbeitungseinrichtung an der Basis kann eine Halterung vorgesehen sein.

Darüber hinaus kann erfindungsgemäß vorgesehen sein, dass die Schlittenanordnung zwei im Wesentlichen senkrecht zueinander angeordnete Linearschlitten zur Verlagerung des Werkstückträgers entlang zueinander im Wesentlichen senkrechter erster und zweiter Linearachsen aufweist. Vorzugsweise liegen diese beiden linearen Achsen in horizontaler Ebene. Dieser Schlittenanordnung kann ein weiterer Linearschlitten zugeordnet sein, der eine Verlagerung entlang einer zu der ersten und zweiten Linearachse im Wesentlichen orthogonalen dritten Linearachse in vertikaler Richtung ermöglicht.

Ferner sieht die Erfindung in einer Ausgestaltungsvariante vor, dass die zweite Rotationsachse im Wesentlichen senkrecht zu der ersten Rotationsachse verläuft. Dadurch wird die vorstehend beschriebene Maschinenkinematik im Hinblick auf die vorteilhafte Konturbearbeitung besonders einfach realisierbar. Ferner kann erfindungsgemäß vorgesehen sein, dass die zweite Rotationsachse im Wesentlichen senkrecht zu der Werkzeugachse des Werkzeugs verläuft.

Eine Weiterbildung der Erfindung sieht vor, dass das Werkzeug zum Bearbeiten des Werkstücks durch einen Antrieb angetrieben, vorzugsweise um die Werkzeugachse drehangetrieben, wird. Als Antriebsvorrichtung können Servomotoren oder andere motorische Antriebe verwendet werden.

Gemäß einer Ausführungsvariante der Erfindung kann vorgesehen sein, dass das Schleif- oder Erodierwerkzeug als Schleif- oder Erodierscheibe ausgebildet ist, wobei die Schleif- oder Erodierscheibe um die Werkzeugachse drehbar ist. Im Falle einer Schleifscheibe kann es sich um herkömmliche zylindrische, mit Rundungen versehene, angeschrägte, d. h. mit wenigstens einer Konizität versehene, um topfförmige Schleifscheiben oder weitere im Wesentlichen rotationssymmetrische Werkzeuge handeln. Schleifscheiben können unter Verwendung verschiedener Werkstoffe ausgebildet sein, d.h. es können beispielsweise Diamant- oder CBN-Schleifscheiben eingesetzt werden. Ähnliches gilt für die Verwendung von Erodierscheiben. Im Falle von Erodierscheiben können wiederum verschiedene Werkstoffe verwendet werden, d. h. beispielsweise Kupfer, Kupfer-Wolfram oder Graphit. Im Zusammenhang kann ferner vorgesehen sein, dass die Werkzeugachse im Wesentlichen senkrecht zur Scheibenseitenfläche verläuft, wobei auf der Werkzeugachse ein Mittelpunkt der Schleif- oder Erodierscheibe liegt.

Alternativ kann vorgesehen sein, dass das Schleif- oder Erodierwerkzeug als Erodierdraht ausgebildet ist, wobei der Erodierdraht linear entlang einer Erodierstrecke geführt ist, wobei die Erodierstrecke im Wesentlichen entlang oder richtungsparallel zu der Werkzeugachse verläuft. In diesem Zusammenhang ist es erfindungsgemäß möglich, dass der Erodierdraht auf einer Drahtführung geführt ist, die wenigstens zwei Führungsrollen umfasst, wobei eine erste Führungsrolle den Draht der Erodierstrecke zuführt und eine zweite Führungsrolle den Draht von der Erodierstrecke abführt. Dabei sei darauf hingewiesen, dass der Erodierdraht von einer entsprechend in der Bearbeitungseinrichtung angeordneten Drahtrolle abgerollt wird, über die Drahtführung in vorstehend beschriebener Weise entlang der Erodierstrecke geführt wird und dann auf eine weitere Drahtrolle aufgerollt wird. In diesem Zusammenhang kann erfindungsgemäß ferner vorgesehen sein, dass die erste und die zweite Führungsrolle an der Bearbeitungseinrichtung, vorzugsweise an einer Seitenfläche der Bearbeitungseinrichtung, angebracht sind. Der Erodierdraht kann beispielsweise aus den Materialien Messing, Kupfer, Wolfram oder Stahl gebildet sein.

Die Erfindung betrifft ferner ein Verfahren zum Bearbeiten eines Werkstücks, insbesondere eines mit Schneiden besetzten Werkstücks, mittels eines Schleif- oder Erodierwerkzeugs, wobei das Verfahren insbesondere mittels einer Vorrichtung der vorstehend beschriebenen Art ausgeführt wird und betrifft ferner den Schritt: Aufnehmen des Werkstücks in einer Aufnahmeeinrichtung eines Werkstückträgers, wobei die Aufnahmeeinrichtung mit dem darin aufgenommenen Werkstück vor und/oder während des Bearbeitens um eine erste Rotationsachse der Aufnahmeeinrichtung drehbar ist.

Das erfindungsgemäße Verfahren sieht vor, dass die Schlittenanordnung relativ zur Basis entlang einer dritten Linearachse verlagerbar ist, die quer zur ersten und zweiten Linearachse verläuft, dass ferner der Werkstückträger mit der diesem zugeordneten Schlittenanordnung und die Bearbeitungseinrichtung relativ zueinander um eine zweite Rotationsachse drehbar sind, die quer zu der ersten Rotationsachse und quer zu der Werkzeugachse verläuft. Schließlich sieht das erfindungsgemäße Verfahren vor jeweils in Abhängigkeit voneinander die Aufnahmeeinrichtung derart um die erste Rotationsachse zu drehen und/oder den Werkstückträger derart um die zweite Rotationsachse zu drehen und/oder die Bearbeitungseinrichtung derart um die zweite Rotationsachse zu drehen, dass während des Bearbeitens eine aktuelle Bearbeitungsposition, in der sich der Bearbeitungspunkt des Schleif- oder Erodierwerkzeugs auf oder nahe zu einer zu bearbeitenden Oberfläche des Werkstücks befindet, auf oder in unmittelbarer Nähe zu der zweiten Rotationsachse liegt.

Obgleich einige Aspekte und Merkmale lediglich in Bezug auf die erfindungsgemäße Vorrichtung beschrieben worden sind, gelten diese entsprechend für Weiterbildungen des erfindungsgemäßen Verfahrens.

Darüber hinaus kann gemäß dem erfindungsgemäßen Verfahren vorgesehen sein, dass die Bearbeitungseinrichtung um die zweite Rotationsachse relativ zu der Basis verdreht wird. Alternativ ist es möglich, dass die Bearbeitungseinrichtung fest an der Basis fixiert ist und dass die Aufnahmeeinrichtung mit dem Werkstück relativ zu der Basis verdreht wird.

Ferner kann gemäß dem erfindungsgemäßen Verfahren vorgesehen sein, dass die Schlittenanordnung zwei im Wesentlichen senkrecht zueinander angeordnete lineare Schlitten zur Verlagerung des Werkstückträgers entlang zueinander im Wesentlichen senkrechter erster und zweiter Linearachsen aufweist. Vorzugsweise liegen diese beiden linearen Achsen in horizontaler Ebene. Dieser Schlittenanordnung kann ein weiterer Linearschlitten zugeordnet sein, der eine Verlagerung entlang einer zu der ersten und zweiten Linearachse im Wesentlichen orthogonalen dritten Linearachse in vertikaler Richtung ermöglicht. Als Folge lässt sich im Rahmen des erfindungsgemäßen Verfahrens das Werkstück entlang der einzelnen linearen Achsen verlagern.

Es versteht sich, dass der Gegenstand der Erfindung nicht auf die zuvor beschriebenen Ausführungsformen und Weiterbildungen beschränkt ist. Die beschriebenen Ausführungsformen, Weiterbildungen und Merkmale können vom Fachmann beliebig kombiniert werden, ohne dabei vom Gegenstand der Erfindung abzuweichen.

Die Erfindung wird im Folgenden beispielhaft anhand der beiliegenden Figuren erläutert. Es zeigen:
- Fig. 1: eine räumliche Darstellung einer ersten Ausführungsvariante der erfindungsgemäßen Vorrichtung, wobei diese als Schleifmaschine ausgebildet ist;
- Fig. 2: eine vergrößerte Ansicht des Bereichs der Vorrichtung gemäß Figur 1, in dem eine Schleifscheibe an einem Werkzeug angreift;
- Fig. 3: eine räumliche Darstellung einer zweiten Ausführungsform der erfindungsgemäßen Vorrichtung, wobei diese als Erodiermaschine mit von einem Erodierdraht gebildeten Erodierstrecke ausgebildet ist; und
- Fig. 4: eine vergrößerte Ansicht des Bereichs der Vorrichtung gemäß Figur 1, in dem der Erodierdraht an einem Werkzeug angreift.

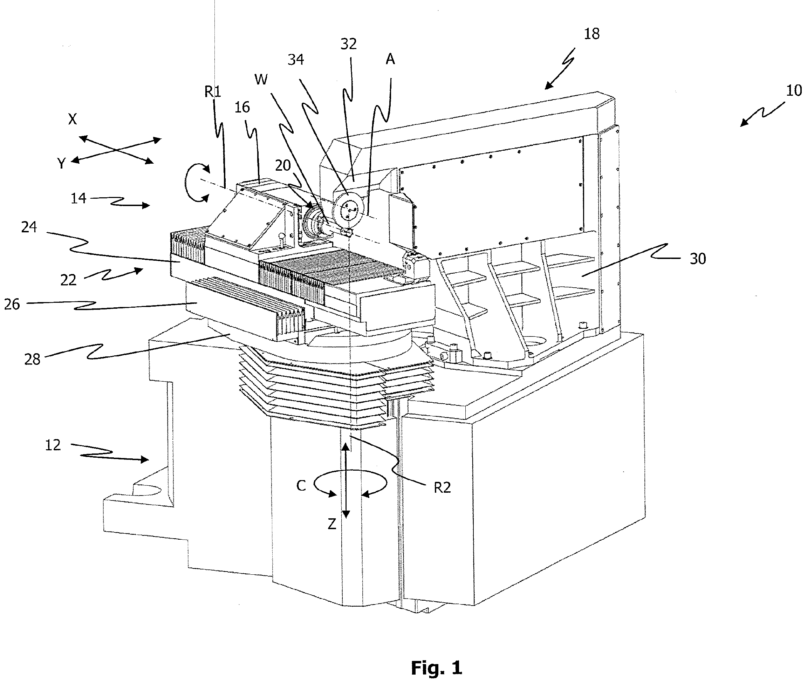

In Figur 1 ist eine erfindungsgemäße Schleifmaschine in räumlicher Darstellung gezeigt und allgemein mit 10 bezeichnet. Diese Schleifmaschine dient zur Schleifbearbeitung eines mit Schneiden besetzten Werkstücks W, beispielsweise eines Schaftfräsers. Die Vorrichtung 10 umfasst eine Basis 12, auf der ein Werkstückträger 14 mit einer Aufnahmeeinrichtung 16 angeordnet ist. Ferner umfasst die Vorrichtung eine Bearbeitungseinrichtung 18, die auf der Basis 12 fixiert ist.

Die Aufnahmeeinrichtung 16 umfasst eine Spindel 20, die zur Aufnahme des Werkstücks W dient. Die Spindel 20 ist innerhalb der Aufnahmeeinrichtung 16 um eine erste Drehachse R1 drehantreibbar. Der Drehantrieb der Spindel 20 lässt sich über eine nicht näher gezeigte Steuereinrichtung ansteuern. Die erste Rotationsachse R1 stellt gleichzeitig eine Rotationsachse des Werkstücks W sowie eine Längsachse des Werkstückträgers 14 dar.

Wie in Figur 1 weiter zu erkennen ist, ist der Werkstückträger 14 auf einer Schlittenanordnung 22 angeordnet. Diese umfasst einen ersten Linearschlitten 24, der unter Einbindung der Maschinensteuerung eine Verlagerung entlang der Achse X ermöglicht. Der erste Linearschlitten 24 ist auf einem zweiten Linearschlitten 26 verlagerbar angebracht, der unter Einbindung der Maschinensteuerung eine Verlagerung entlang der zur Achse X orthogonalen Achse Y ermöglicht. Die Schlittenanordnung 22 sieht ferner eine weitere gesteuerte Verlagerungsmöglichkeit entlang der Basis 12 in vertikaler Richtung entlang der Achse Z vor. Darüber hinaus erkennt man, dass sich der Werkstückträger 14 relativ zur Basis 12 um eine zweite Rotationsachse R2 verlagern lässt. Dies ist dadurch realisiert, dass der erste Linearschlitten 24 und der zweite Linearschlitten 26 auf einer Trägerplatte 28 angeordnet sind, die sich relativ zu der dritten Linearführung entlang der Achse Z und insbesondere relativ zu der Basis 12 um die zweite Rotationsachse R2 verschwenken lässt.

Wendet man sich der Bearbeitungseinrichtung 18 zu, so erkennt man, dass diese über einen fest auf der Basis 12 montierten Aufbau 30 mit einem Bearbeitungskopf 32 ausgebildet ist. An diesem Bearbeitungskopf 32 ist ein in Form einer Schleifscheibe 34 vorgesehenes Schleifwerkzeug angebracht. Die Schleifscheibe 34 ist um eine Werkzeugachse A drehantreibbar, wobei der ansteuerbare Drehantrieb in dem Bearbeitungskopf 32 vorgesehen ist. Es ist für den Fachmann klar, dass die Schleifscheibe 34, die in Figur 1 als zylindrische Scheibe ausgebildet ist und mit ihrer Außenumfangsfläche an dem Werkstück W zur Bearbeitung angreift, in beliebiger anderweitiger Ausgestaltung ausgebildet sein kann, beispielsweise mit einer Konizität, topfförmig, mit Rundungen oder dergleichen.

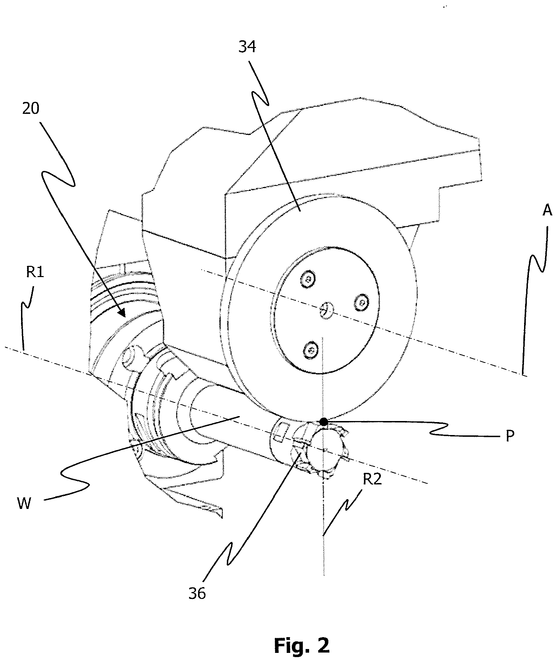

Wendet man sich nun der vergrößerten Darstellung gemäß Figur 2 zu, so erkennt man die Achslage gemäß der beschriebenen ersten Ausführungsform vorliegenden Erfindung. Dabei ist herauszuheben, dass durch die Anordnung gemäß der erfindungsgemäßen Vorrichtung 10 die Schleifscheibe 34 derart relativ zu dem Werkstück W positionierbar ist, dass ein Bearbeitungspunkt P am Werkstück W, beispielsweise zur Bearbeitung einzelner Schneiden 36 des Werkstücks W an dessen Außenumfangsfläche oder aber auch an dessen Stirnfläche, unmittelbar auf oder in unmittelbarer Nähe zu der zweiten Rotationsachse R2 liegt. So ist es möglich, das Werkstück W unmittelbar am oder in unmittelbarer Nähe zu dem Bearbeitungspunkt P um die zweite Rotationsachse R2 im Rahmen der Bearbeitung zu verschwenken, ohne weitere Stellbewegungen, insbesondere in der Schlittenanordnung 22, vornehmen zu müssen. Dies hat den Vorteil, dass bei der Bearbeitung des Werkstücks W am Bearbeitungspunkt P allenfalls nur geringe Stellbewegungen erforderlich sind, sodass die Bearbeitung exakt und schnell erfolgen kann. Soll beispielsweise das Werkstück W entlang seiner Außenumfangsfläche oder entlang seiner Stirnfläche bestimmten, sich wiederholenden Bearbeitungsprozessen unterzogen werden, so reicht es aus, das Werkstück W um die erste Rotationsachse R1 durch Drehverlagerung der Spindel 20 zu bewegen und an jeweils vorbestimmten Bearbeitungspositionen dann über die Schleifscheibe 34 am jeweiligen Bearbeitungspunkt P zu bearbeiten, wobei an diesem die vorstehend angesprochene relative Schwenkbewegung zwischen dem Werkstück W und der Schleifscheibe 34 um die zweite Rotationsachse R2 erfolgen kann.

Ferner sei angemerkt, dass im Rahmen der Schleifbearbeitung ein Medium insbesondere zu Kühlzwecken dem Schleifprozess zugeführt werden kann, beispielsweise in Form eines flüssigen Mediums. Auch hierzu wird auf das Fachwissen verwiesen.

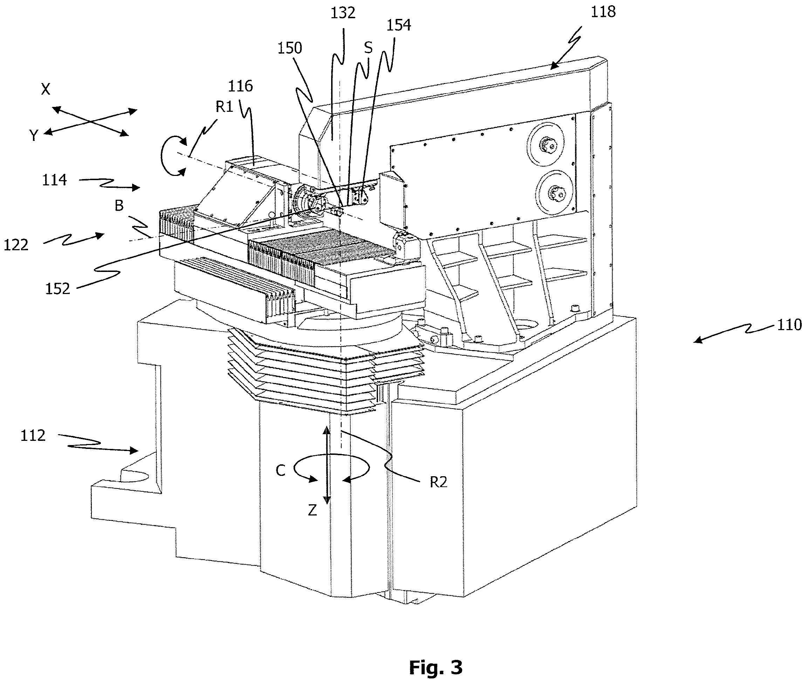

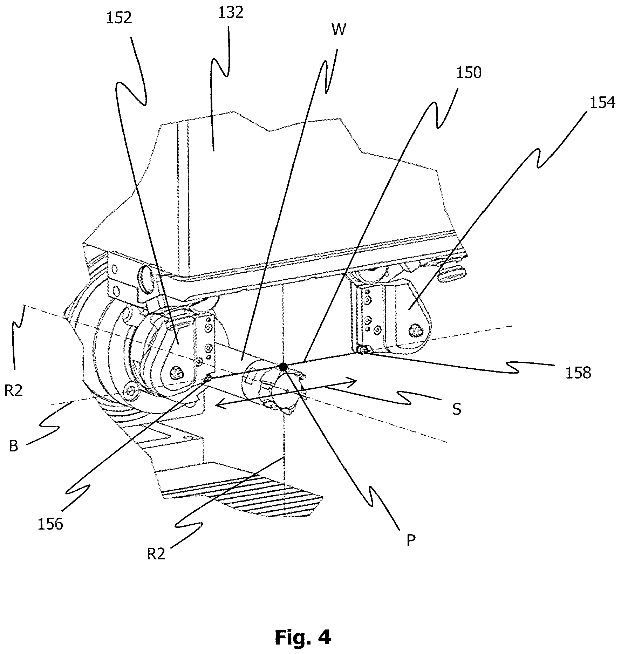

Figuren 3 und 4 zeigen eine zweite Ausführungsform der Erfindung, die hinsichtlich des Aufbaus der dort gezeigten Vorrichtung 110 weitgehend mit der Vorrichtung 10 gemäß der ersten Ausführungsform übereinstimmt. Allerdings handelt es sich bei der Vorrichtung 110 gemäß der zweiten Ausführungsform um eine Erodiermaschine. Zur Vereinfachung der Beschreibung und zur Vermeidung von Wiederholungen werden nachfolgend mit Bezug auf die zweite Ausführungsform der Erfindung für gleichwirkende oder gleichartige Komponenten dieselben Bezugszeichen verwendet, wie bei der Beschreibung der ersten Ausführungsform, jedoch mit der Ziffer "1" vorangestellt.

Die Vorrichtung 110 gemäß der zweiten Ausführungsform der Erfindung unterscheidet sich von der Vorrichtung 10 gemäß Figuren 1 und 2 dadurch, dass der Bearbeitungskopf nicht mit einer Schleifscheibe als Werkzeug ausgebildet ist, sondern mit einem Erodierwerkzeug. Das Erodierwerkzeug umfasst einen Erodierdraht 150, der entlang einer Erodierstrecke S geführt ist. Die Erodierstrecke S definiert eine Werkzeugachse B. Die Führung des Erodierdrahts 150 ist über zwei an dem Bearbeitungskopf 132 vorgesehene Führungsanordnungen 152 und 154 realisiert.

Im Detail erkennt man dies wiederum in Figur 4. Die beiden Führungsanordnungen 152 und 154 sind an der Unterseite des Bearbeitungskopfes 132 angebracht und umfassen jeweils eine Führungsrolle 156, 158, über die der Erodierdraht 150 entlang der Erodierstrecke S geführt ist. Wie nicht näher im Detail gezeigt, dem Fachmann grundsätzlich aber aus Erodiermaschinen bekannt ist, bei denen ein Erodierdraht als Erodierwerkzeug eingesetzt wird, wird der Erodierdraht von einer Zuführrolle oder Vorratsrolle innerhalb des Bearbeitungskopfs abgewickelt, der Erodierstrecke S zugeführt, in dieser über die beiden Führungsrollen 156, 158 mit hinreichender Drahtspannung geführt und von dieser schließlich einer Aufwickelrolle innerhalb des Bearbeitungskopfes zugeführt und auf diese aufgewickelt.

Der Erodierdraht 150 ist auf ein elektrisches Spannungspotenzial gesetzt, wobei das Werkstück auf ein hiervon erheblich abweichendes Spannungspotenzial gesetzt wird, um einen Erodiervorgang an der Werkstückoberfläche ausführen zu können. In der Regel wird ein dem Fachmann bekanntes Verhältnis insbesondere aus Spannung, Stromstärke, Impulsdauer und Pausendauer angewendet, um im Rahmen des Erodiervorgangs ein Plasma zur Materialbearbeitung, insbesondere zum Materialabtrag, am Werkstück zu erzeugen. Das Grundprinzip der Erodierbearbeitung ist dem Fachmann bekannt.

Wendet man sich wieder der erfindungsgemäßen Vorrichtung 110 in der Darstellung gemäß Figur 4 zu, so erkennt man erneut, dass die Erodierbearbeitung am Bearbeitungspunkt P tangential am Aussenumfang des Werkstücks W erfolgt, wobei der Bearbeitungspunkt P in der Darstellung gemäß Figur 4 auf der zweiten Rotationsachse R2 liegt. Es ergeben sich im Wesentlichen dieselben Vorteile, wie vorstehend mit Bezug auf die erste Ausführungsform beschrieben. Durch eine relative Verdrehung zwischen dem Bearbeitungskopf 132 und dem Werkstück W um die zweite Rotationsachse R2 lässt sich unmittelbar am Bearbeitungspunkt P die Ausrichtung des Erodierdrahts 150 relativ zu der aktuell bearbeiteten Werkzeugschneide im Rahmen der Erodierbearbeitung schnell und ohne zusätzliche Stellbewegungen über die Schlittenanordnung 122 erreichen. Dadurch lässt sich am Bearbeitungspunkt P sehr präzise und unter geringem kinematischen Verstellaufwand eine Bearbeitung der jeweiligen Werkzeugschneide erzielen. Durch eine Rotation des Werkstücks W um die erste Rotationsachse R1 lässt sich somit die Außenumfangsfläche tangential oder auch die Stirnfläche des Werkstücks axial oder radial an den jeweiligen Schneiden schrittweise bearbeiten, wobei während der Bearbeitung eine Verschwenkung des Werkstücks W relativ zum Erodierdraht 150 um die zweite Rotationsachse R2 am oder nahe dem Bearbeitungspunkt P erfolgen kann.

Schließlich sei darauf hingewiesen, dass in einer nicht gezeigten Ausführungsform die Erfindung gemäß Vorrichtung auch als Erodiermaschine mit einer Erodierscheibe ausgebildet werden kann. Eine solche Ausführungsform gleicht im Wesentlichen im kinematische Aufbau, sieht man von der zu Erodierbearbeitung erforderlichen Technik des Bearbeitungskopfes und der zum Erzeugen des Spannungspotentials verwendeten technischen Vorkehrungen ab, der Vorrichtung, wie sie mit Bezug auf Figuren 1 und 2 beschrieben ist.

Ferner sei angemerkt, dass im Rahmen der Erodierbearbeitung regelmäßig ein flüssiges Dielektrikum zugeführt werden kann. Auch hierzu wird auf das Fachwissen verwiesen.

Die Erfindung hat den Vorteil, unabhängig von einer Gestaltung in Form einer Schleifmaschine oder in Form einer Erodiermaschine, dass eine Werkstückbearbeitung präzise und in zeitsparender Weise mit einem verhältnismäßig einfachen Maschinenaufbau erfolgen kann.

## Patentansprüche

1. Vorrichtung (10; 110) zum Bearbeiten eines Werkstücks (W), insbesondere eines mit Schneiden besetzten Werkstücks (W), mittels eines Schleif- oder Erodierwerkzeugs (34; 150), wobei die Vorrichtung (10; 110) umfasst:
- eine Basis (12; 112),
- einen Werkstückträger (14; 114) mit einer Aufnahmeeinrichtung (16; 116) zum Aufnehmen eines Werkstücks (W), und
- eine Bearbeitungseinrichtung (18; 118) mit dem für das Bearbeiten verwendeten Schleif- oder Erodierwerkzeug (34; 150), das eine Werkzeugachse (A; B) aufweist,
wobei die Aufnahmeeinrichtung (16; 116) mit dem darin aufgenommenen Werkstück (W) um eine erste Rotationsachse (R1) der Aufnahmeeinrichtung (16; 116) drehbar ist und auf einer Schlittenanordnung (22; 122) angeordnet ist,
die einen ersten Linearschlitten (24) umfasst, der entlang einer dem ersten Linearschlitten (24) zugeordneten ersten Linearachse (X) verlagerbar ist, die parallel zur Rotationsachse (R1) verläuft, und die einen zweiten Linearschlitten (26) umfasst, der entlang einer dem zweiten Linearschlitten (26) zugeordneten zweiten Linearachse (Y) verlagerbar ist, die quer zur Rotationsachse (R1) und quer zur ersten Linearachse (X) verläuft;
wobei der Werkstückträger (14; 114) mit der diesem zugeordneten Schlittenanordnung (22; 122) und die Bearbeitungseinrichtung (18; 118) relativ zueinander um eine zweite Rotationsachse (R2) drehbar sind, die quer zu der ersten Rotationsachse (R1) und quer zu der Werkzeugachse (A; B) verläuft,
**dadurch gekennzeichnet,**
**dass** die Schlittenanordnung (22; 122) relativ zur Basis (12; 112) entlang einer dritten Linearachse (Z) verlagerbar ist, die quer zur ersten und zweiten Linearachse (X, Y) verläuft, und
**dass** die Vorrichtung (10; 110) dazu eingerichtet ist, in Abhängigkeit voneinander die Aufnahmeeinrichtung (16; 116) derart um die erste Rotationsachse (R1) zu drehen und/oder den Werkstückträger (14; 114) derart um die zweite Rotationsachse (R2) zu drehen und/oder die Bearbeitungseinrichtung (18; 118) derart relativ um die zweite Rotationsachse (R2) zu drehen, dass während des Bearbeitens eine aktuelle Bearbeitungsposition, in der sich der Bearbeitungspunkt des Schleif- oder Erodierwerkzeugs (34; 150) auf einer zu bearbeitenden Oberfläche des Werkstücks (W) befindet, auf der zweiten Rotationsachse (R2) liegt.

2. Vorrichtung (10; 110) nach Anspruch 1, **dadurch gekennzeichnet, dass** sich die zweite Rotationsachse (R2) senkrecht zu einer Fläche einer Oberseite (20) der Basis (12; 112) erstreckt.

3. Vorrichtung (10; 110) nach Anspruch 1 oder 2, **dadurch gekennzeichnet, dass** die Bearbeitungseinrichtung (18; 118) um die zweite Rotationsachse (R2) drehbar an der Basis (12; 112) angebracht ist.

4. Vorrichtung (10; 110) nach einem der Ansprüche 1 bis 3, **dadurch gekennzeichnet, dass** die Schlittenanordnung (22; 122) zwei senkrecht zueinander angeordnete Linearschlitten (24, 26) zur Verlagerung des Werkstückträgers (14; 114) entlang zueinander senkrechter erster und zweiter Linearachsen (X, Y) aufweist.

5. Vorrichtung (10; 110) nach einem der vorangehenden Ansprüche, **dadurch gekennzeichnet, dass** die zweite Rotationsachse (R2) senkrecht zu der ersten Rotationsachse (R1) verläuft.

6. Vorrichtung (10; 110) nach einem der vorangehenden Ansprüche, **dadurch gekennzeichnet, dass** die zweite Rotationsachse (R2) senkrecht zu der Werkzeugachse (A; B) des Schleif- oder Erodierwerkzeugs (34; 150)verläuft.

7. Vorrichtung (10; 110) nach einem der vorangehenden Ansprüche, **dadurch gekennzeichnet, dass** das Schleif- oder Erodierwerkzeug (34; 150)zum Bearbeiten des Werkstücks (W) durch einen Antrieb angetrieben wird.

8. Vorrichtung (10) nach einem der vorangehenden Ansprüche, **dadurch gekennzeichnet, dass** das Schleif- oder Erodierwerkzeug als Schleif- oder Erodierscheibe ausgebildet ist, wobei die Schleif- oder Erodierscheibe um die Werkzeugachse (A) drehbar ist.

9. Vorrichtung (10) nach Anspruch 8, **dadurch gekennzeichnet, dass** die Werkzeugachse (A) senkrecht zur Scheibenseitenfläche verläuft, wobei auf der Werkzeugachse (A) ein Mittelpunkt der Schleif- oder Erodierscheibe liegt.

10. Vorrichtung (110) nach einem der Ansprüche 1 bis 7, **dadurch gekennzeichnet, dass** das Schleif- oder Erodierwerkzeug als Erodierdraht (150) ausgebildet ist, wobei der Erodierdraht (150) linear entlang einer Erodierstrecke (S) geführt ist, wobei die Erodierstrecke (S) im wesentlichen entlang oder richtungsparallel zu der Werkzeugachse (B) verläuft.

11. Vorrichtung (10; 110) nach Anspruch 10, **dadurch gekennzeichnet, dass** der Erodierdraht (150) auf einer Drahtführung geführt ist, die wenigstens zwei Rollen umfasst, wobei eine erste Rolle den Erodierdraht (150) der Erodierstrecke (S) zuführt und eine zweite Rolle den Draht von der Erodierstrecke abführt.

12. Vorrichtung (10; 110) nach einem der Ansprüche 10 und 11, **dadurch gekennzeichnet, dass** die erste und die zweite Rolle an der Bearbeitungseinrichtung (118), vorzugsweise an einer Seitenfläche der Bearbeitungseinrichtung (118), angebracht sind.

13. Verfahren zum Bearbeiten eines Werkstücks (W), insbesondere eines mit Schneiden besetzten Werkstücks (W), mittels eines Schleif- oder Erodierwerkzeugs (34; 150), wobei das Verfahren insbesondere mittels einer Vorrichtung (10; 110) nach einem der vorangehenden Ansprüche ausgeführt wird, wobei das Verfahren die Schritte umfasst:
- Aufnehmen des Werkstücks (W) in einer Aufnahmeeinrichtung (16; 116) eines Werkstückträgers (14; 114), wobei die Aufnahmeeinrichtung (16; 116) mit dem darin aufgenommenen Werkstück (W) vor und/oder während des Bearbeitens um eine erste Rotationsachse (R1) der Aufnahmeeinrichtung (16; 116) drehbar ist;
wobei der Werkstückträger (14; 114) mit der diesem zugeordneten Schlittenanordnung (22; 122) und die Bearbeitungseinrichtung (18; 118) relativ zueinander um eine zweite Rotationsachse (R2) drehbar sind, die quer zu der ersten Rotationsachse (R1) und quer zu der Werkzeugachse (A; B) verläuft,
**dadurch gekennzeichnet,**
**dass** die Schlittenanordnung (22; 122) relativ zur Basis (12; 112) entlang einer dritten Linearachse (Z) verlagerbar ist, die quer zur ersten und zweiten Linearachse verläuft, und
**dass** in Abhängigkeit voneinander die Aufnahmeeinrichtung (16; 116) derart um die erste Rotationsachse (R1) gedreht wird und/oder den Werkstückträger (14; 114) derart um die zweite Rotationsachse (R2) gedreht wird und/oder die Bearbeitungseinrichtung (18; 118) derart um die zweite Rotationsachse (R2) gedreht wird, dass während des Bearbeitens eine aktuelle Bearbeitungsposition, in der sich der Bearbeitungspunkt des Schleif- oder Erodierwerkzeugs (34; 150) auf einer zu bearbeitenden Oberfläche des Werkstücks (W) befindet, auf der zweiten Rotationsachse (R2) liegt.

## Claims

1. An apparatus (10; 110) for machining a workpiece (W), in particular a workpiece (W) provided with cutting edges, by means of a grinding or erosion tool (34; 150), the apparatus (10; 110) comprising:
- a base (12; 112),
- a workpiece carrier (14; 114) comprising a receiving device (16; 116) for receiving a workpiece (W), and
- a machining device (18; 118) compising the grinding or erosion tool (34; 150) that is used for machining and has a tool axis (A; B),
wherein the receiving device (16; 116) together with the workpiece (W) received therein is rotatable about a first axis of rotation (R1) of the receiving device (16; 116) and is arranged on a slide assembly (22; 122)
comprising a first linear slide (24) that is displaceable along a first linear axis (X) associated with the first linear slide (24) and running parallel to the axis of rotation (R1), and comprising a second linear slide (26) that is displaceable along a second linear axis (Y) associated with the second linear slide (26) and running transversely to the axis of rotation (R1) and transversely to the first linear axis (X);
wherein the workpiece carrier (14; 114) together with the associated slide assembly (22; 122) and the machining device (18; 118) are rotatable relative to one another about a second axis of rotation (R2) that is transverse to the first axis of rotation (R1) and transverse to the tool axis (A; B),
**characterized in**
**that** the slide assembly (22; 122) is displaceable relative to the base (12; 112) along a third linear axis (Z) that is transverse to the first and second linear axes (X, Y), and
**that** the apparatus (10; 110) is configured to rotate the receiving device (16; 116) about the first axis of rotation (R1) and/or to rotate the workpiece carrier (14; 114) about the second axis of rotation (R2) and/or to relatively rotate the machining device (18; 118) about the second axis of rotation (R2) in mutual dependence such that, during machining, a current machining position in which the machining point of the grinding or erosion tool (34; 150) is located on a surface of the workpiece (W) to be machined is on the second axis of rotation (R2).

2. The apparatus (10; 110) of claim 1, **characterized in that** the second axis of rotation (R2) is perpendicular to a surface of a top side (20) of the base (12; 112).

3. The apparatus (10; 110) of claim 1 or 2, **characterized in that** the machining device (18; 118) is attached to the base (12; 112) such that it is rotatable about the second axis of rotation (R2).

4. The apparatus (10; 110) of any one of claims 1 to 3, **characterized in that** the slide assembly (22; 122) comprises two linear slides (24, 26) that are arranged perpendicularly to each other for displacing the workpiece carrier (14; 114) along first and second linear axes (X, Y) which are perpendicular to each other.

5. The apparatus (10; 110) of any one of the preceding claims, **characterized in that** the second axis of rotation (R2) is perpendicular to the first axis of rotation (R1).

6. The apparatus (10; 110) of any one of the preceding claims, **characterized in that** the second axis of rotation (R2) is perpendicular to the tool axis (A; B) of the grinding or erosion tool (34; 150).

7. The apparatus (10; 110) of any one of the preceding claims, **characterized in that** the grinding or erosion tool (34; 150) is driven by a drive to machine the workpiece (W).

8. The apparatus (10) of any one of the preceding claims, **characterized in that** the grinding or erosion tool is configured as a grinding or erosion disk, the grinding or erosion disk being rotatable about the tool axis (A).

9. The apparatus (10) of claim 8, **characterized in that** the tool axis (A) is perpendicular to the disk's side surface, wherein a center point of the grinding or erosion disk is on the tool axis (A).

10. The apparatus (110) of any one of claims 1 to 7, **characterized in that** the grinding or erosion tool is configured as an erosion wire (150), the erosion wire (150) being guided linearly along an erosion section (S), the erosion section (S) running substantially along or in a direction parallel to the tool axis (B).

11. The apparatus (10; 110) of claim 10, **characterized in that** the erosion wire is guided on a wire guide comprising at least two rollers, a first roller feeding the erosion wire (150) to the erosion section (S) and a second roller removing the wire from the erosion section.

12. The apparatus (10; 110) of any one of claims 10 and 11, **characterized in that** the first and the second rollers are attached to the machining device (118), perferably to a side surface of the machining device (118).

13. A method for machining a workpiece (W), in particular a workpiece (W) provided with cutting edges, by means of a grinding or erosion tool (34; 150), the method being performed in particular with an apparatus (10; 110) of any one of the preceding claims, the method comprising the steps of:
- receiving the workpiece (W) in a receiving device (16; 116) of a workpiece carrier (14; 114), the receiving device (16; 116) together with the workpiece (W) received therein being rotatable about a first axis of rotation (R1) of the receiving device (16; 116) before and/or during machining;
wherein the workpiece carrier (14; 114) together with the associated slide assembly (22; 122) and the machining device (18; 118) are rotatable relative to one another about a second axis of rotation (R2) that is transverse to the first axis of rotation (R1) and transverse to the tool axis (A; B),
**characterized in**
**that** the slide assembly (22; 122) is displaceable relative to the base (12; 112) along a third linear axis (Z) that is transverse to the first and second linear axes, and
**that** the receiving device (16; 116) is rotated about the first axis of rotation (R1) and/or the workpiece carrier (14; 114) is rotated about the second axis of rotation (R2) and/or the machining device (18; 118) is rotated about the second axis of rotation (R2) in mutual dependence such that, during machining, a current machining position in which the machining point of the grinding or erosion tool (34; 150) is located on a surface of the workpiece (W) to be machined is on the second axis of rotation (R2).

## Revendications

1. Dispositif (10 ; 110) pour l'usinage d'une pièce (W), en particulier d'une pièce (W) pourvue de lames, au moyen d'un outil (34 ; 150) d'affûtage ou d'érosion, le dispositif (10 ; 110) comprenant :
- une base (12 ; 112),
- un porte-pièce (14 ; 114) avec un moyen de réception (16 ; 116) pour recevoir une pièce (W), et
- un moyen d'usinage (18 ; 118) doté de l'outil (34 ; 150) d'affûtage ou d'érosion utilisé pour l'usinage, qui présente un axe d'outil (A ; B),
dans lequel le moyen de réception (16 ; 116) peut tourner autour d'un premier axe de rotation (R1) du moyen de réception (16 ; 116) avec la pièce (W) reçue dans ledit moyen de réception et est disposé sur un agencement de chariots (22 ; 122) comprenant un premier chariot linéaire (24) apte à être déplacé le long d'un premier axe linéaire (X) associé au premier chariot linéaire (24) et s'étendant parallèlement à l'axe de rotation (R1), et comprenant un deuxième chariot linéaire (26) apte à être déplacé le long d'un deuxième axe linéaire (Y) associé au deuxième chariot linéaire (26) et s'étendant transversalement à l'axe de rotation (R1) et transversalement au premier axe linéaire (X) ;
dans lequel le porte-pièce (14 ; 114) avec l'agencement de chariots (22 ; 122) associé à celui-ci et le moyen d'usinage (18 ; 118) peuvent tourner l'un par rapport à l'autre autour d'un deuxième axe de rotation (R2) s'étendant transversalement au premier axe de rotation (R1) et transversalement à l'axe d'outil (A ; B),
**caractérisé en ce que**
l'agencement de chariots (22 ; 122) peut être déplacé par rapport à la base (12 ; 112) le long d'un troisième axe linéaire (Z) s'étendant transversalement aux premier et deuxième axes linéaires (X, Y), et **en ce que**
le dispositif (10 ; 110) est conçu pour, en fonction l'un de l'autre, faire tourner le moyen de réception (16 ; 116) autour du premier axe de rotation (R1) et/ou faire tourner le porte-pièce (14 ; 114) autour du deuxième axe de rotation (R2) et/ou faire tourner le moyen d'usinage (18 ; 118) autour du deuxième axe de rotation (R2) de telle manière qu'une position d'usinage actuelle, dans laquelle le point d'usinage de l'outil (34 ; 150) d'affûtage ou d'érosion se trouve sur une surface à usiner de la pièce (W), se situe sur le deuxième axe de rotation (R2) pendant l'usinage.

2. Dispositif (10 ; 110) selon la revendication 1, **caractérisé en ce que** le deuxième axe de rotation (R2) s'étend perpendiculairement à une surface d'une face supérieure (20) de la base (12 ; 112).

3. Dispositif (10 ; 110) selon la revendication 1 ou 2, **caractérisé en ce que** le moyen d'usinage (18 ; 118) est monté sur la base (12 ; 112) de manière à pouvoir tourner autour du deuxième axe de rotation (R2).

4. Dispositif (10 ; 110) selon l'une des revendications 1 à 3, **caractérisé en ce que** l'agencement de chariots (22 ; 122) comprend deux chariots linéaires (24, 26) disposés perpendiculairement l'un à l'autre pour déplacer le porte-pièce (14 ; 114) le long de premier et deuxième axes linéaires (X, Y) perpendiculaires l'un à l'autre.

5. Dispositif (10 ; 110) selon l'une quelconque des revendications précédentes, **caractérisé en ce que** le deuxième axe de rotation (R2) s'étend perpendiculairement au premier axe de rotation (R1).

6. Dispositif (10 ; 110) selon l'une quelconque des revendications précédentes, **caractérisé en ce que** le deuxième axe de rotation (R2) s'étend perpendiculairement à l'axe d'outil (A ; B) de l'outil (34 ; 150) d'affûtage ou d'érosion.

7. Dispositif (10 ; 110) selon l'une quelconque des revendications précédentes, **caractérisé en ce que** l'outil (34 ; 150) d'affûtage ou d'érosion est entraîné par un entraînement pour l'usinage de la pièce (W).

8. Dispositif (10) selon l'une quelconque des revendications précédentes, **caractérisé en ce que** l'outil d'affûtage ou d'érosion est réalisé sous la forme d'un disque d'affûtage ou d'érosion, le disque d'affûtage ou d'érosion pouvant tourner autour de l'axe d'outil (A).

9. Dispositif (10) selon la revendication 8, **caractérisé en ce que** l'axe d'outil (A) s'étend perpendiculairement à la surface latérale du disque, un centre du disque d'affûtage ou d'érosion étant situé sur l'axe d'outil (A).

10. Dispositif (110) selon l'une des revendications 1 à 7, **caractérisé en ce que** l'outil d'affûtage ou d'érosion est réalisé sous la forme d'un fil d'érosion (150), le fil d'érosion (150) étant guidé de manière linéaire le long d'un parcours d'érosion (S), le parcours d'érosion (S) s'étendant sensiblement le long de l'axe d'outil (B) ou parallèlement à celui-ci.

11. Dispositif (10 ; 110) selon la revendication 10, **caractérisé en ce que** le fil d'érosion (150) est guidé sur un guide-fil qui comprend au moins deux rouleaux, un premier rouleau amenant le fil d'érosion (150) au parcours d'érosion (S) et un deuxième rouleau éloignant le fil du parcours d'érosion.

12. Dispositif (10 ; 110) selon l'une des revendications 10 et 11, **caractérisé en ce que** le premier et le deuxième rouleau sont montés sur le moyen d'usinage (118), de préférence sur une surface latérale du moyen d'usinage (118).

13. Procédé pour l'usinage d'une pièce (W), en particulier d'une pièce (W) pourvue de lames, au moyen d'un outil (34 ; 150) d'affûtage ou d'érosion, le procédé étant mis en oeuvre en particulier au moyen d'un dispositif (10 ; 110) selon l'une quelconque des revendications précédentes, le procédé comprenant les étapes consistant à :
- recevoir la pièce (W) dans un moyen de réception (16 ; 116) d'un porte-pièce (14 ; 114), le moyen de réception (16 ; 116) pouvant tourner avec la pièce (W) qui y est reçue avant et/ou pendant l'usinage autour d'un premier axe de rotation (R1) du moyen de réception (16 ; 116) ;
dans lequel le porte-pièce (14 ; 114) avec l'agencement de chariots (22 ; 122) associé à celui-ci et le moyen d'usinage (18 ; 118) peuvent tourner l'un par rapport à l'autre autour d'un deuxième axe de rotation (R2) qui s'étend transversalement au premier axe de rotation (R1) et transversalement à l'axe d'outil (A ; B),
**caractérisé en ce que**
l'agencement de chariots (22 ; 122) peut être déplacé par rapport à la base (12 ; 112) le long d'un troisième axe linéaire (Z) s'étendant transversalement aux premier et deuxième axes linéaires, et **en ce que**
en fonction l'un de l'autre, le moyen de réception (16 ; 116) est tourné autour du premier axe de rotation (R1) et/ou le porte-pièce (14 ; 114) est tourné autour du deuxième axe de rotation (R2) et/ou le moyen d'usinage (18 ; 118) est tourné autour du deuxième axe de rotation (R2) de telle manière qu'une position d'usinage actuelle, dans laquelle le point d'usinage de l'outil (34 ; 150) d'affûtage ou d'érosion se trouve sur une surface à usiner de la pièce (W), se situe sur le deuxième axe de rotation (R2) pendant l'usinage.
